# EUROPÄISCHE PATENTSCHRIFT

(11) **EP 3 982 004 B1**
(45) Veröffentlichungstag und Bekanntmachung des Hinweises auf die Patenterteilung: **17.04.2024**
(21) Anmeldenummer: 21200951.8
(22) Anmeldetag: 05.10.2021
(51) Int. Cl.: F16H 25/06, F16H 55/02

(54) **KOAXIALGETRIEBE**
COAXIAL TRANSMISSION
ENGRENAGE COAXIAL

(30) Priorität: 06.10.2020 DE 102020126107
(43) Veröffentlichungstag der Anmeldung: 13.04.2022
(73) Patentinhaber: WITTENSTEIN SE, 97999 Igersheim (DE)
(72) Erfinder: Schmidt, Michael, 97234 Reichenberg (DE); Kimmelmann, Martin, 97990 Weikersheim (DE); Schreiber, Heiko, 02692 Doberschau (DE); Bayer, Thomas, 97999 Igersheim (DE)
(74) Vertreter: Zimmermann & Partner Patentanwälte mbB

(56) Entgegenhaltungen:
- DE-A1-102006 042 786
- DE-A1-102007 016 189

## Beschreibung

### Gebiet der Erfindung

Die Erfindung betrifft ein Koaxialgetriebe und eine Verwendung eines Koaxialgetriebes.

### Stand der Technik

Aus dem Stand der Technik sind Getriebe bekannt, welche Zahnstifte umfassen, die in einem Zahnträger verschieblich gelagert sind. Zum Antrieb der Zahnstifte werden Antriebselemente mit einer Profilierung, wie beispielsweise Kurvenscheiben, verwendet. Die Zahnstifte werden in dem Zahnträger bewegt und greifen in eine Verzahnung ein, so dass es zu einer Relativbewegung zwischen dem Zahnträger mit den Zahnstiften und der Verzahnung kommt. Die Relativbewegung zwischen Verzahnung und Zahnstiften ist dabei geringer als die Bewegung des Antriebselementes mit der Profilierung. Auf diese Weise lassen sich hohe Übersetzungen erzielen. Beispielsweise betreffen die DE 10 2006 042 786 A1 und die DE 10 2007 016 189 A1 Getriebe.

Allerdings weisen bisher bekannte Lösungen aus dem Stand der Technik Restriktionen auf, insbesondere in Bezug auf die Tragfähigkeit des Getriebes, in Bezug auf die Übersetzung des Getriebes oder in Bezug auf die Kompaktheit des Getriebes.

### Offenbarung der Erfindung

Aufgabe der Erfindung ist es, ein Koaxialgetriebe anzugeben, welches gegenüber aus dem Stand der Technik bekannten Koaxialgetrieben verbessert ist, wobei insbesondere eine höhere Tragfähigkeit, eine höhere Übersetzung oder eine kompaktere Bauweise erreicht werden soll. Weiterhin ist es Aufgabe der Erfindung, eine Verwendung eines solchen Koaxialgetriebes anzugeben.

Die Aufgabe wird mit einem Koaxialgetriebe nach dem Anspruch 1 und einer Verwendung nach dem nebengeordneten Anspruch gelöst. Vorteilhafte Weiterbildungen und Ausführungsformen ergeben sich aus den Unteransprüchen und aus dieser Beschreibung.

Ein Aspekt der Erfindung betrifft ein Koaxialgetriebe, mit einer bezüglich einer Drehachse des Koaxialgetriebes axial ausgerichteten Verzahnung, einem Zahnträger mit axial ausgerichteten Führungen, Zahnstiften, welche jeweils einen in einer Führung des Zahnträgers axial verschieblich gelagerten Rumpf und einen Kopfbereich umfassen, wobei der Kopfbereich gegenüber dem Rumpf verbreitert ausgebildet ist, und wobei der Kopfbereich mindestens zwei Zähne zum Eingriff mit der Verzahnung umfasst.

Ein weiterer Aspekt der Erfindung betrifft eine Verwendung eines Koaxialgetriebes nach einer der hierin beschriebenen Ausführungsformen.

Typischerweise sind hierin Ausdrücke wie "axial", "radial" oder "Umfangsrichtung" bezüglich der Drehachse des Koaxialgetriebes zu verstehen, beispielsweise bezüglich der Drehachse der Kurvenscheibe des Koaxialgetriebes.

Erfindungsgemäß sind die Führungen des Zahnträgers bezüglich der Drehachse des Koaxialgetriebes axial ausgerichtet. Erfindungsgemäß sind die Zahnstifte in den Führungen des Zahnträgers axial verschieblich gelagert. Typischerweise ist ein Zahnstift in einer Führung des Zahnträgers in genau einer Richtung verschieblich gelagert, typischerweise in Richtung der Längsachse des Zahnstiftes. Dies kann beispielsweise dadurch erreicht werden, dass der Zahnstift über eine bestimmte Länge, insbesondere über eine bestimmte Länge des Rumpfs entlang der Längsachse des Zahnstifts, einen gleichbleibenden Querschnitt in Verschieberichtung aufweist. Der

Zahnstift ist in der Führung derart aufgenommen, dass der Zahnstift entlang der Längsachse in der Führung axial bezüglich der Drehachse des Koaxialgetriebes verschieblich gelagert ist. Typischerweise ist eine Führung für einen Zahnstift in dem Zahnträger als Bohrung oder Öffnung mit in axialer Richtung gleichbleibendem Querschnitt ausgeführt ist. Die Bohrung oder Öffnung ist typischerweise in axialer Richtung durchgehend durch den Zahnträger ausgebildet. Weitere typische Zahnträger umfassen rechteckige Einfräsungen oder Langlöcher oder Schlitze als Führungen. Der Zahnträger umgreift bei typischen Ausführungsformen die Drehachse in Umfangsrichtung. Insbesondere kann der Zahnträger kreisförmig oder ringförmig ausgebildet sein.

Bei typischen Ausführungsformen umfasst das Koaxialgetriebe eine um die Drehachse rotierbare Kurvenscheibe zum axialen Antrieb der Zahnstifte. Typischerweise umfasst die Kurvenscheibe eine Profilierung als Antriebselement zum axialen Antrieb der Zahnstifte, insbesondere durch Axialhub der Zahnstifte. Typischerweise ist die Profilierung entlang der Umfangsrichtung der Kurvenscheibe mit mindestens einer Erhebung in axialer Richtung ausgeführt, insbesondere mit mindestens zwei oder mindestens drei Erhebungen. Typischerweise sind die Kurvenscheibe, der Zahnträger und die Verzahnung in dieser Reihenfolge in einer axialen Richtung angeordnet. Durch den Antrieb der Kurvenscheibe mit der Profilierung kann eine Kraft in Richtung der jeweiligen Längsachse der Zahnstifte auf die Zahnstifte ausgeübt werden, so dass die Zahnstifte in den Führungen des Zahnträgers in Richtung der Verzahnung gedrückt werden.

Erfindungsgemäße Koaxialgetriebe umfassen eine axial ausgerichtete Verzahnung. Insbesondere kann die Verzahnung als Verzahnung eines Planrads ausgeführt sein. Die Verzahnung umfasst typischerweise Verzahnungszähne, welche in Umfangsrichtung aneinandergereiht angeordnet sind. Die Verzahnungszähne umfassen typischerweise jeweils zwei Verzahnungsflanken.

Typische Koaxialgetriebe weisen eine Antriebswelle und eine Abtriebswelle auf. Typischerweise sind die Antriebswelle und die Abtriebswelle um die Drehachse des Koaxialgetriebes drehbar gelagert. Typischerweise sind die Antriebswelle oder die Abtriebswelle oder beide als Hohlwellen ausgeführt. Typischerweise ist die Kurvenscheibe an der Antriebswelle vorgesehen. Bei typischen Ausführungsformen ist der Zahnträger an der Abtriebswelle vorgesehen, wobei insbesondere die Verzahnung oder ein Planrad mit der Verzahnung drehfest mit einem Gehäuse des Koaxialgetriebes verbunden ist oder nicht relativ zu dem Gehäuse drehbar ist. Bei weiteren typischen Ausführungsformen ist eine Verzahnung oder ein Planrad mit der Verzahnung an der Abtriebswelle vorgesehen, wobei insbesondere ein Zahnträger drehfest mit einem Gehäuse des Koaxialgetriebes verbunden ist oder nicht relativ zu dem Gehäuse drehbar ist.

Bei erfindungsgemäßen Ausführungsformen umfassen die Zahnstifte jeweils einen in einer Führung des Zahnträgers axial verschieblich gelagerten Rumpf. Typischerweise erstreckt sich der Rumpf entlang der Längsachse eines Zahnstifts. Die Längsachse des Zahnstifts ist typischerweise zumindest im Wesentlichen parallel zu der Drehachse des Koaxialgetriebes ausgerichtet. Erfindungsgemäß ist der Rumpf in einer Führung des Zahnträgers aufgenommen. Der Rumpf kann entlang der Längsachse des Zahnstifts einen zumindest im Wesentlichen gleichbleibenden Querschnitt aufweisen. In typischen Ausführungsformen ist eine zu der Längsachse des Zahnstifts senkrechte Querschnittsfläche des Rumpfs, hierin auch "zweite Querschnittsfläche" genannt, rund ausgebildet. Insbesondere kann die Querschnittsfläche des Rumpfs kreisrund ausgebildet sein. Typischerweise ist der Rumpf zumindest im Wesentlichen zylinderförmig ausgebildet. Bei weiteren typischen Ausführungsformen weist der Rumpf eine zumindest teilweise nicht-runde Querschnittsfläche auf, beispielsweise eine polygonale Querschnittsfläche oder eine runde Querschnittsfläche mit mindestens einer Abflachung, insbesondere eine kreisrunde Querschnittsfläche mit mindestens einer Abflachung.

Typischerweise ist zumindest ein Teil der Zahnstifte biegesteif ausgeführt. Der Begriff "biegesteif" ist dabei typischerweise technisch zu verstehen, das heißt, dass Biegungen der Zahnstifte aufgrund der Steifigkeit des Materials der Zahnstifte derart klein sind, dass sie für die Kinematik des Koaxialgetriebes zumindest im Wesentlichen unbedeutend sind.

Bei Ausführungsformen umfasst der Zahnstift in einem der Kurvenscheibe zugewandten Endbereich des Zahnstifts eine Zahnstiftbasis. Die Zahnstiftbasis ist typischerweise eingerichtet zur Lagerung des Zahnstifts an einem Lagersegment des Koaxialgetriebes oder an der Kurvenscheibe. Typischerweise ist jeweils ein Zahnstift an einem jeweiligen Lagersegment gelagert. Beispielsweise kann die Zahnstiftbasis eines Zahnstifts lose oder gleitend an einem Lagersegment gelagert sein. Bei Ausführungsformen weist die Zahnstiftbasis eine Auswölbung auf, insbesondere eine Auswölbung in axialer Richtung. Typischerweise ist die Auswölbung eingerichtet zur Lagerung des Zahnstifts in einer Ausnehmung eines Lagersegments. Bei typischen Ausführungsformen sind die Lagersegmente des Koaxialgetriebes zur Lagerung der Zahnstifte an der Kurvenscheibe eingerichtet, insbesondere zur Lagerung der Zahnstifte an der Profilierung der Kurvenscheibe. Beispielsweise können die Lagersegmente gleitend an der Kurvenscheibe gelagert sein. Die Lagersegmente können jeweils in Umfangsrichtung gegen jeweilige benachbarte Lagersegmente schwenkbar ausgebildet sein. Bei Ausführungsformen sind die Lagersegmente aus Metall hergestellt. In weiteren Ausführungsformen können die Lagersegmente aus Kunststoff hergestellt sein.

Bei erfindungsgemäßen Ausführungsformen umfassen die Zahnstifte jeweils einen Kopfbereich.

Der Kopfbereich umfasst erfindungsgemäß mindestens zwei Zähne zum Eingriff mit der Verzahnung. Ein Zahn umfasst typischerweise zwei Zahnflanken. Typischerweise umfasst der Zahn einen Zahnkopf. Der Zahnkopf bildet typischerweise den Übergang zwischen den zwei Zahnflanken des Zahns. Der Zahnkopf ist typischerweise verrundet. Typischerweise ist der Zahnkopf zumindest im Wesentlichen radial ausgerichtet. Zwischen dem Rumpf eines Zahnstifts und dem mindestens einen Zahn umfasst der Kopfbereich typischerweise einen Sockel. Typischerweise ist der mindestens eine Zahn an dem Sockel angeordnet, insbesondere an einer der Verzahnung zugewandten Seite des Sockels.

Erfindungsgemäß ist der Kopfbereich gegenüber dem Rumpf in Umfangsrichtung um die Drehachse verbreitert ausgebildet. Der Kopfbereich kann insbesondere in eine Umfangsrichtung oder in beide Umfangsrichtungen gegenüber dem Rumpf verbreitert ausgebildet sein. Insbesondere kann der Kopfbereich spiegelsymmetrisch bezüglich einer zu der Längsachse des Zahnstifts parallelen und bezüglich der Drehachse radial ausgerichteten Symmetrieebene gegenüber dem Rumpf verbreitert sein.

Bei typischen Ausführungsformen ist eine Kopfbereichbreite des Kopfbereichs in Umfangsrichtung mindestens 1,2-fach breiter, insbesondere 1,5-fach breiter, als ein Rumpfdurchmesser des Rumpfs in Umfangsrichtung. Die Kopfbereichbreite kann insbesondere als Durchmesser des Kopfbereichs in Umfangsrichtung bestimmt sein. Beispielsweise kann der Durchmesser des Kopfbereichs radial innen an dem Kopfbereich, zentral bezüglich des Rumpfquerschnitts, oder radial außen an dem Kopfbereich bestimmt werden. Bei typischen Ausführungsformen ist eine Winkelweite des Kopfbereichs bezüglich der Drehachse mindestens 1,2-fach breiter, insbesondere 1,5-fach breiter, als eine Rumpfwinkelweite des Rumpfs bezüglich der Drehachse.

Bei Ausführungsformen ist der Kopfbereich gegenüber dem Rumpf in radialer Richtung verbreitert ausgebildet. Der Kopfbereich kann nach radial innen oder nach radial außen bezüglich der Drehachse des Koaxialgetriebes verbreitert sein, insbesondere nach radial innen und nach radial außen. Bei typischen Ausführungsformen ist der Kopfbereich in radialer Richtung mindestens 1,2-mal breiter, insbesondere mindestens 1,3-mal breiter oder mindestens 1,5-mal breiter als der Rumpf. In Ausführungsformen ist der Kopfbereich gegenüber dem Rumpf insbesondere in Umfangsrichtung und in radialer Richtung verbreitert ausgebildet. Eine Verbreiterung des Kopfbereichs kann insbesondere den Vorteil bieten, dass eine Eingriffsfläche zum Eingriff des mindestens einen Zahns eines Zahnstifts mit der Verzahnung vergrößert ist. Bei weiteren typischen Ausführungsformen ist der Kopfbereich in radialer Richtung im Wesentlichen gleich breit wie der Rumpf.

Typischerweise ist eine zur Längsachse eines Zahnstifts senkrechte, erste Querschnittsfläche des Kopfbereichs, insbesondere eines Sockels des Kopfbereichs, mindestens 1,5-mal größer, insbesondere mindestens 1,7-mal größer oder mindestens 2-mal größer, größer als eine zur Längsachse senkrechte, zweite Querschnittsfläche des Rumpfs. Beispielsweise kann die erste Querschnittsfläche des Kopfbereichs ungefähr 2-mal größer sein als die zweite Querschnittsfläche des Rumpfs. Typischerweise überdeckt der mindestens eine Zahn eines Kopfbereichs eine zur Längsachse senkrechte Zahnfläche, wobei die Zahnfläche mindestens 1,2-mal größer ist als die zweite Querschnittsfläche des Rumpfs, insbesondere mindestens 1,5-mal größer oder mindestens 1,7-mal größer. Die Zahnfläche ist typischerweise kleiner oder gleich der ersten Querschnittsfläche des Kopfbereichs.

Bei typischen Ausführungsformen umfasst eine zu einer Längsachse des Zahnstifts senkrechte, erste Querschnittsfläche des Kopfbereichs zwei bezüglich der Drehachse radial ausgerichtete Kanten. Typischerweise ist die erste Querschnittsfläche des Kopfbereichs eine Querschnittsfläche eines Sockels des Kopfbereichs. Die radial ausgerichteten Kanten können insbesondere bezüglich der Drehachse den Teilungswinkel der Zahnstifte in Umfangsrichtung einschließen. Bei typischen Ausführungsformen wird die erste Querschnittsfläche nach radial innen hin oder nach radial außen hin durch einen Kreisbogen oder eine gerade Linie begrenzt, beispielsweise nach radial außen hin durch einen Kreisbogen und nach radial innen hin durch eine gerade Linie.

Bei Ausführungsformen bildet die erste Querschnittsfläche des Kopfbereichs zumindest im Wesentlichen ein Trapez, einen Kreisringausschnitt oder eine Kreisteilfläche. Bei Ausführungsformen mit einer als Trapez ausgebildeten ersten Querschnittsfläche kann das Trapez zwei radial bezüglich der Drehachse ausgerichtete Kanten umfassen. Das Trapez kann mindestens eine Kreissehne eines Kreises mit einem Mittelpunkt in der Drehachse umfassen. Bei Ausführungsformen mit einer als Kreisteilfläche ausgebildeten ersten Querschnittsfläche kann die Kreisteilfläche beispielsweise zwei Kreisbögen umfassen, insbesondere zwei Kreisbögen eines Kreises mit Mittelpunkt in der Längsachse des Zahnstifts. Die Kreisteilfläche kann durch zwei radial bezüglich der Drehachse ausgerichtete Kanten begrenzt werden. Ausführungsformen mit einer Kreisteilfläche als erste Querschnittsfläche können als Drehteil hergestellt sein.

Typischerweise ist eine Winkelweite des Kopfbereichs, insbesondere eines Sockels des Kopfbereichs, bezüglich der Drehachse zumindest im Wesentlichen gleich einem Teilungswinkel der Zahnstifte. Der Teilungswinkel der Zahnstifte berechnet sich beispielsweise als 360° geteilt durch die Anzahl der Zahnstifte in dem Zahnträger. Insbesondere können zwei radial ausgerichtete Kanten des Kopfbereichs, insbesondere der ersten Querschnittsfläche des Kopfbereichs, bezüglich der Drehachse die Winkelweite einschließen. Unter der Winkelweite des Kopfbereichs ist insbesondere die Ausdehnung des Kopfbereichs im Winkelmaß bezüglich der Drehachse zu verstehen. Die Winkelweite ist insbesondere in einer Ebene senkrecht zu der Drehachse und durch den Kopfbereich bestimmt. Typischerweise bilden die Kopfbereiche der in den Zahnträger eingesetzten Zahnstifte einen axial verzahnten Ring um die Drehachse.

Bei typischen Ausführungsformen bildet der Kopfbereich eines Zahnstifts einen Gleitkontakt zu Kopfbereichen von in Umfangsrichtung benachbarten Zahnstiften aus. Insbesondere können die Kopfbereiche benachbarter Zahnstifte in Umfangsrichtung an dem Gleitkontakt aneinanderstoßen oder sich aneinander abstützen. Die Kopfbereiche können am Gleitkontakt in axialer Richtung aneinander gleiten. Der Gleitkontakt ist typischerweise an einem Sockel des Kopfbereichs ausgebildet. Der Gleitkontakt ist typischerweise eingerichtet, die Zahnstifte gegen ein Verdrehen der Zahnstifte um die jeweilige Längsachse der Zahnstifte zu sichern. Beispielsweise können sich Kopfbereiche benachbarter Zahnstifte an einem Gleitkontakt zwischen jeweiligen radial ausgerichteten Gleitflächen aneinander abstützen. Die radial ausgerichteten Gleitflächen können insbesondere radial ausgerichtete Kanten der ersten Querschnittsfläche gemäß hierin beschriebenen Ausführungsformen umfassen. Der Gleitkontakt zwischen Kopfbereichen benachbarter Zahnstifte kann insbesondere als Flächenkontakt ausgebildet sein. In weiteren Ausführungsformen kann der Gleitkontakt als Linienkontakt entlang einer axialen Richtung an mindestens einer radialen Position, insbesondere an mindestens zwei radialen Positionen, ausgebildet sein.

Typische Koaxialgetriebe umfassen eine Verdrehsicherung, welche eine Gleitfläche zum Gleitkontakt mit einer Radialinnenfläche des Kopfbereichs oder einer Radialaußenfläche des Kopfbereichs umfasst. Bei Ausführungsformen ist die Gleitfläche der Verdrehsicherung zumindest teilweise radial innerhalb der Zahnstifte angeordnet, insbesondere zum Bereitstellen eines Gleitkontakts mit der Radialinnenfläche des Kopfbereichs. Bei Ausführungsformen ist die Gleitfläche der Verdrehsicherung zumindest teilweise radial außerhalb der Zahnstifte angeordnet, insbesondere zum Bereitstellen eines Gleitkontakts mit der Radialaußenfläche des Kopfbereichs. Der Gleitkontakt zwischen der Gleitfläche der Verdrehsicherung und der Radialinnenfläche oder der Radialaußenfläche kann zum Gleiten des Kopfbereichs in axialer Richtung eingerichtet sein. Die Verdrehsicherung ist typischerweise eingerichtet, einen Zahnstift gegen ein Verdrehen um die Längsachse des Zahnstifts zu sichern. Insbesondere kann der Gleitkontakt derart eingerichtet sein, dass sich der Kopfbereich gegen ein Verdrehen um die Längsachse des Zahnstifts an der Gleitfläche der Verdrehsicherung abstützt. Die Verdrehsicherung kann beispielsweise ringförmig um die Drehachse ausgebildet sein.

Bei Ausführungsformen ist die Verdrehsicherung drehfest mit dem Zahnträger oder drehfest mit einem Gehäuse des Koaxialgetriebes verbunden. Bei Ausführungsformen ist die Verdrehsicherung als separates Bauteil hergestellt. Bei weiteren Ausführungsformen ist die Verdrehsicherung einstückig mit dem Zahnträger oder mit dem Gehäuse hergestellt.

Typischerweise weist der Kopfbereich in axialer Richtung eine axiale Höhe von mindestens einer 1,5-fachen Zahnhöhe des mindestens einen Zahns auf, insbesondere von mindestens der 2-fachen Zahnhöhe oder von mindestens der 3-fachen Zahnhöhe. Unter der Zahnhöhe eines Zahns ist insbesondere eine Höhe des Zahns in axialer Richtung zu verstehen. Die axiale Höhe des Kopfbereichs umfasst insbesondere eine axiale Sockelhöhe eines Sockels des Kopfbereichs und die Zahnhöhe des mindestens einen Zahns. Typischerweise weist der Kopfbereich in axialer Richtung eine axiale Höhe von maximal der 6-fachen Zahnhöhe des mindestens einen Zahns auf, insbesondere von maximal der 5-fachen Zahnhöhe oder von maximal der 4-fachen Zahnhöhe.

Bei Ausführungsformen, welche nicht durch die Ansprüche gedeckt sind, umfasst der Kopfbereich einen einzelnen Zahn, insbesondere einen einzelnen Zahn mit genau zwei Zahnflanken. Der einzelne Zahn weist typischerweise in Umfangsrichtung eine Zahnbreite auf, welche breiter ist als der Rumpfdurchmesser des Rumpfs in Umfangsrichtung. Insbesondere kann die Zahnbreite zumindest im Wesentlichen gleich der Kopfbereichbreite des Kopfbereichs sein. Ein einzelner Zahn, insbesondere ein breiter einzelner Zahn, kann vorteilhaft eine hohe Überdeckung der Verzahnung oder niedrige Übersetzungen bereitstellen.

Bei erfindungsgemäßen Ausführungsformen umfasst der Kopfbereich mindestens zwei Zähne zum Eingriff mit der Verzahnung, insbesondere mindestens drei oder mindestens vier Zähne. Typischerweise umfasst der Kopfbereich maximal 15 Zähne, insbesondere maximal 10 Zähne oder maximal 8 Zähne. Die Zähne umfassen typischerweise jeweils zwei Zahnflanken. Die Zähne sind typischerweise in Umfangsrichtung aneinandergereiht. Typischerweise sind die Zahnköpfe der Zähne radial ausgerichtet. Die Zahnstifte weisen typischerweise jeweils die gleiche Anzahl an Zähnen auf. Zahnstifte mit mehr als einem Zahn können den Vorteil bieten, dass die Zahnstifte zum Eingriff der Zähne mit der Verzahnung mit einem geringeren Zahnhub betrieben werden können. Insbesondere können Biegebelastungen reduziert werden, beispielsweise in den Zahnstiften oder in einer Lagerung der Zahnstifte an der Kurvenscheibe.

Typischerweise ist ein Zahnteilungswinkel der mindestens zwei Zähne des Kopfbereichs eines Zahnstifts zumindest im Wesentlichen gleich oder gleich einem Vielfachen eines Verzahnungsteilungswinkel der Verzahnung, insbesondere zumindest im Wesentlichen gleich einem ganzzahligen Vielfachen. Der Zahnteilungswinkel bestimmt sich beispielsweise aus dem Winkel, welchen zwei in Umfangsrichtung benachbarte Zähne, insbesondere Zahnköpfe der benachbarten Zähne, eines Kopfbereichs bezüglich der Drehachse einschließen. Der Verzahnungsteilungswinkel der Verzahnung berechnet sich beispielsweise als 360° geteilt durch die Anzahl der Verzahnungszähne der Verzahnung. Bei typischen Ausführungsformen ist eine Gesamtanzahl der Zähne der Zahnstifte des Koaxialgetriebes ungleich der Anzahl der Verzahnungszähne der Verzahnung. Typischerweise ist eine rechnerische Zähnezahl ungleich der Anzahl der Verzahnungszähne der Verzahnung. Die rechnerische Zähnezahl ist insbesondere als das zur Anzahl der Verzahnungszähne nächstgelegene ganzzahlige Vielfache der Anzahl der Führungen oder der Anzahl der Zahnstifte bestimmt. Bei Ausführungsformen unterscheidet sich die rechnerische Zähnezahl um die Anzahl der Erhebungen der Kurvenscheibe von der Anzahl der Verzahnungszähne der Verzahnung. Typische Koaxialgetriebe können eingerichtet sein, eine Übersetzung des Koaxialgetriebes von mindestens 3, insbesondere von mindestens 4 oder mindestens 5, oder von maximal 250, insbesondere von maximal 220 oder maximal 200 bereitzustellen.

Bei Ausführungsformen sind je Erhebung der Kurvenscheibe gleichzeitig mindestens zwei Zähne gleich tief im Eingriff mit der Verzahnung. Beispielsweise kann vorteilhaft eine hohe Überdeckung der Verzahnung, insbesondere eine vollflächige Nutzung, erreicht werden. Ein Vorteil kann sein, dass höhere Momente übertragbar sind oder eine höhere Steifigkeit des Koaxialgetriebes bereitgestellt wird. Typischerweise ist die Längsachse eines Zahnstifts bei Betrieb des Koaxialgetriebes immer zumindest im Wesentlichen parallel zur Drehachse. Insbesondere kann ein ausschließlicher Gleitkontakt zwischen den Zähnen der Zahnstifte und der Verzahnung bereitgestellt werden.

Bei typischen Ausführungsformen verlaufen Zahnflanken eines Zahnstifts oder Verzahnungsflanken der Verzahnung, insbesondere die Zahnflanken und die Verzahnungsflanken, zumindest teilweise entlang von Schraubenlinien um die Drehachse. Typischerweise laufen zwei Zahnflanken eines Zahns oder zwei Verzahnungsflanken eines Verzahnungszahns entlang jeweiliger Flankenlinien spitz in Richtung der Drehachse des Koaxialgetriebes hin zu. Bei Ausführungsformen kann eine Zahnflanke oder eine Verzahnungsflanke zumindest teilweise entlang einer Wendelfläche verlaufen. Insbesondere kann ein flächiger Eingriff der Zahnflanken und der Verzahnungsflanken bereitgestellt werden. Bei Ausführungsformen mit Zahnstiften mit jeweils mindestens zwei Zähnen können vorteilhaft bei einem Eingriff mit der Verzahnung für die mindestens zwei Zähne bei gleichem Axialhub gleiche Eingriffsverhältnisse bereitgestellt werden.

Typische Ausführungsformen des Koaxialgetriebes können gegenüber dem Stand der Technik den Vorteil bieten, dass ein breiterer Übersetzungsbereich des Koaxialgetriebes bereitgestellt werden kann. Ausführungsformen können eine höhere Überdeckung der Verzahnung oder eine vollflächige Nutzung bereitstellen. Insbesondere können höhere Momente übertragen werden. Typische Koaxialgetriebe können vorteilhaft eine höhere Tragfähigkeit des Koaxialgetriebes oder eine höhere Steifigkeit aufweisen. Typische Ausführungsformen können kompakter gebaut werden. Bei typischen Ausführungsformen kann eine Sicherung gegen ein Verdrehen der Zahnstifte im Kopfbereich des Zahnstifts bereitgestellt werden. Beispielsweise kann vorteilhafterweise auf eine Sicherung gegen ein Verdrehen an einer Zahnstiftbasis oder am Rumpf verzichtet werden. Typische Ausführungsformen können den Vorteil bieten, dass die Zahnstifte zum Eingriff der Zähne mit der Verzahnung mit einem geringeren Zahnhub betrieben werden können. Insbesondere können Biegebelastungen reduziert werden.

### Kurze Beschreibung der Zeichnungen

Nachfolgend wird die Erfindung anhand der beiliegenden Zeichnungen näher erläutert, wobei die Figuren zeigen:
- Fig. 1: zeigt eine typische Ausführungsform eines aus dem Stand der Technik bekannten Koaxialgetriebes in einer schematischen Schnittansicht;
- Fig. 2A-C: zeigen schematische Ansichten eines Zahnstifts gemäß einer erfindungsgemäßenAusführungsform;
- Fig. 3: zeigt eine schematische Ansicht in axialer Richtung auf Kopfbereiche von Zahnstiften eines erfindungsgemäßen Koaxialgetriebes;
- Fig. 4A-D: zeigen schematische Ansichten eines Zahnstifts gemäß einer weiteren erfindungsgemäßen Ausführungsform;
- Fig. 5: zeigt eine schematische Ansicht in axialer Richtung auf Kopfbereiche von Zahnstiften eines weiteren erfindungsgemäßen Koaxialgetriebes; und
- Fig. 6A-C: zeigen schematische Ansichten eines Zahnstifts gemäß einer Ausführungsform, welche nicht durch die Ansprüche gedeckt ist.

### Beschreibung von Ausführungsbeispielen

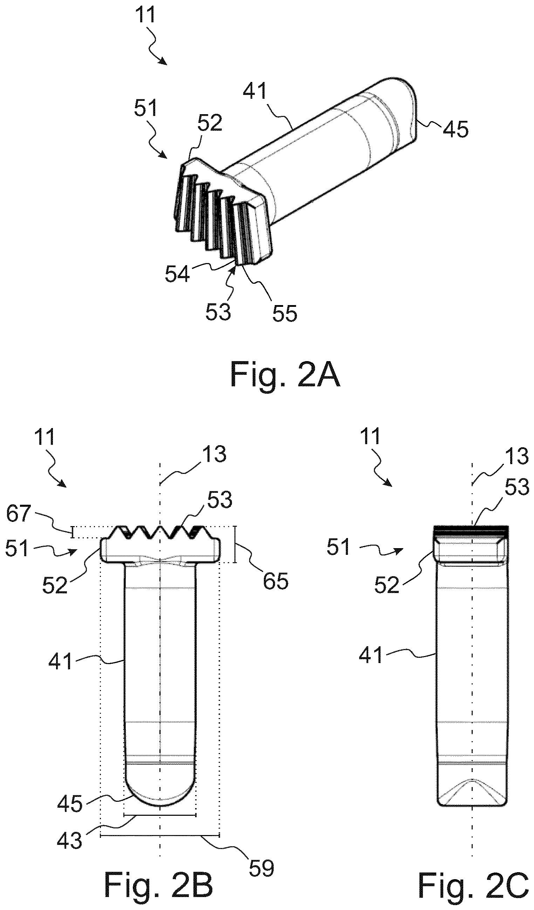

Nachfolgend werden typische Ausführungsformen der Erfindung anhand der Figuren beschrieben, wobei die Erfindung nicht auf die Ausführungsbeispiele beschränkt ist, vielmehr wird der Umfang der Erfindung durch die Ansprüche bestimmt. Bei der Beschreibung der Ausführungsformen werden unter Umständen in verschiedenen Figuren und für verschiedene Ausführungsformen gleiche Bezugszeichen für gleiche oder ähnliche Teile verwendet. Teilweise werden Merkmale, welche bereits im Zusammenhang mit anderen Figuren beschrieben wurden, der Übersichtlichkeit halber nicht nochmals beschrieben. Zur Übersichtlichkeit sind teilweise nicht alle jeweiligen Merkmale mit einem Bezugszeichen versehen, beispielsweise die Zähne (Bezugszeichen 53 in der Figuren 2A bis 5).

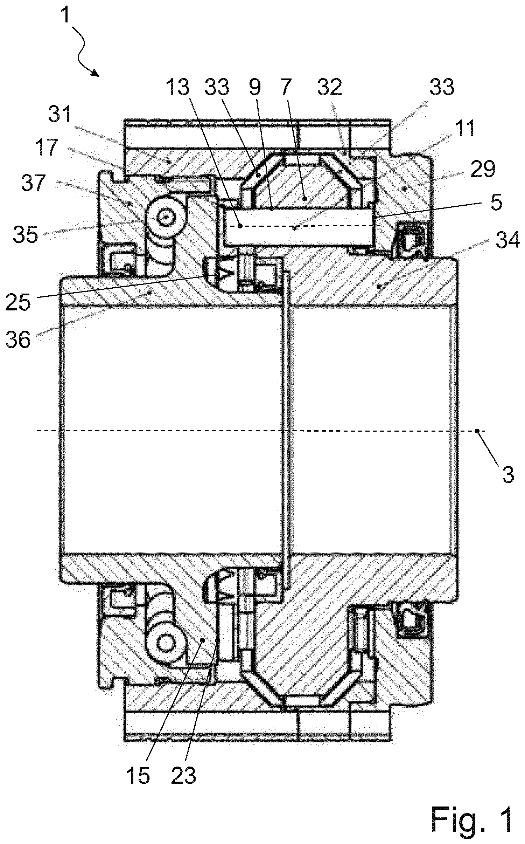

In der Fig. 1 ist ein Ausschnitt eines bekannten Koaxialgetriebes in einer schematischen Schnittansicht dargestellt. Die Fig. 1 zeigt ein Koaxialgetriebe 1 mit einer bezüglich einer Drehachse 3 des Koaxialgetriebes 1 axial ausgerichteten Verzahnung 5. Die Verzahnung 5 ist als Verzahnung eines Planrads 29 umlaufend um die Drehachse 3 ausgeführt. Das Planrad 29 ist drehfest mit einem Gehäuse des Koaxialgetriebes 1 verbunden. Beispielsweise ist das Planrad 29 in Fig. 1 drehfest mit einem ersten Gehäuseteil 31 und einem zweiten Gehäuseteil 32 des Gehäuses des Koaxialgetriebes 1 verbunden.

Das Koaxialgetriebe 1 umfasst einen Zahnträger 7, welcher an einer Abtriebswelle 34 vorgesehen ist. Der Zahnträger 7 ist über ein erstes Lager um die Drehachse 3 drehbar an dem Gehäuse gelagert. Das erste Lager umfasst beispielsweise erste Wälzkörper 33. Der Zahnträger 7 weist axial ausgerichtete Führungen 9 auf, in welchen jeweils Zahnstifte 11 aufgenommen sind. Die Zahnstifte 11 sind entlang ihrer jeweiligen Längsachsen 13 in den Führungen 9 axial bezüglich der Drehachse 3 verschieblich gelagert. Die Längsachsen 13 der Zahnstifte 11 sind parallel zu der Drehachse 3 ausgerichtet.

Die Zahnstifte 11 umfassen jeweils einen Kopfbereich mit beispielsweise fünf Zähnen, welche zum Eingriff mit der Verzahnung 5 ausgerichtet sind. Die Zahnstifte 11 umfassen jeweils eine Zahnstiftbasis, welche aus der Führung 9 des jeweiligen Zahnstifts 11 hervorsteht und an einem Lagersegment 17 gelagert ist. Ein Zahnstift 11 umfasst weiterhin einen Rumpf zwischen der Zahnstiftbasis und dem Kopfbereich, wobei der Rumpf zumindest teilweise in der Führung 9 aufgenommen ist. Eine Auswölbung der Zahnstiftbasis steht in einer Ausnehmung des Lagersegments 17.

Die Lagersegmente 17 sind jeweils über eine Gleitlagerfläche 23 an einer Profilierung 25 einer Kurvenscheibe 15 des Koaxialgetriebes 1 gelagert. Die Lagersegmente 17 sind jeweils in Umfangsrichtung gegen jeweilige benachbarte Lagersegmente schwenkbar. Die Kurvenscheibe 15 ist an einer Antriebswelle 36 vorgesehen. Die Antriebswelle 36 ist über ein zweites Lager um die Drehachse 3 drehbar an dem Gehäuse gelagert. Das zweite Lager umfasst beispielsweise zweite Wälzkörper 35 und ein Anstellelement 37. Das Anstellelement 37 ist in Fig. 1 drehfest mit dem ersten Gehäuseteil 31 des Gehäuses verbunden. Die Profilierung 25 der Kurvenscheibe 15 ist um die Drehachse 3 umlaufend ausgeführt und weist in der Fig. 1 zwei axiale Erhebungen in Richtung der Zahnstifte 11 auf.

Fig. 2A zeigt eine schematische, isometrische Ansicht eines Zahnstifts 11 mit einer Zahnstiftbasis 45, einem Rumpf 41 und einem Kopfbereich 51. Der Kopfbereich 51 umfasst einen Sockel 52 und auf dem Sockel 52 angeordnete Zähne 53, in Fig. 2A-2C beispielsweise fünf Zähne 53. Die Zähne 53 umfassen jeweils zwei Zahnflanken 55 und einen Zahnkopf 54. Fig. 2B zeigt den Zahnstift 11 in einer Ansicht von radial außen in Richtung der Drehachse. In Fig. 2B ist der Kopfbereich 51 gegenüber dem Rumpf 41 in Umfangsrichtung verbreitert. Insbesondere ist eine Kopfbereichbreite 59 des Kopfbereichs 51 mehr als 1,5-fach breiter als ein Rumpfdurchmesser 43 des Rumpfs 41. Der Kopfbereich 51 weist eine axiale Höhe 65 in Richtung der Längsachse 13 von mehr als einer 1,5-fachen Zahnhöhe 67 der Zähne 53 auf. Fig. 2C zeigt eine Seitenansicht des Zahnstifts 11 in Umfangsrichtung. In Fig. 2C ist der Kopfbereich 51 in radialer Richtung so breit wie der Rumpf 41.

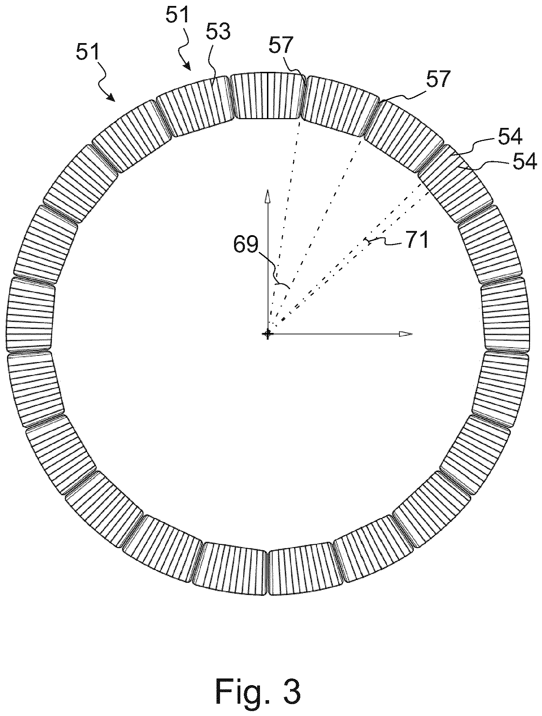

Fig. 3 zeigt eine schematische Ansicht in axialer Richtung auf die Zahnköpfe 51 der Zahnstifte eines typischen Koaxialgetriebes. In Fig. 3, Fig. 4D und Fig. 5 sind auf den jeweiligen Zahnköpfen 51 jeweils insbesondere sowohl die Zahnköpfe 54 als auch Täler zwischen den Zähnen 53 oder Ränder am Fuße der Zähne 53 dargestellt. Die Kopfbereiche 51, insbesondere die Sockel der Kopfbereiche 51, weisen in Fig. 3 jeweils eine erste Querschnittsfläche senkrecht zur Drehachse auf. Die erste Querschnittsfläche ist in Umfangsrichtung durch zwei radial bezüglich der Drehachse ausgerichtete Kanten 57 begrenzt. Radial außen ist die erste Querschnittsfläche durch einen Kreisbogen eines Kreises mit Mittelpunkt in der Drehachse begrenzt, radial innen beispielsweise durch eine gerade Linie.

Die Kopfbereiche 51 weisen bezüglich der Drehachse eine Winkelweite 69 auf, welche gleich einem Teilungswinkel der Zahnstifte in den Führungen des Koaxialgetriebes ist. Die Kopfbereiche 51 stoßen in Umfangsrichtung aneinander. Insbesondere bilden die Kopfbereiche 51 an radial ausgerichteten Flächen, welche die Kanten 57 umfassen, einen Gleitkontakt zu in Umfangsrichtung benachbarten Kopfbereichen 51 aus. Die Kopfbereiche 51 können sich in Umfangsrichtung aneinander abstützen und sind gegen ein Verdrehen um eine jeweilige Längsachse der Zahnstifte gesichert.

Die Zähne 53 eines Kopfbereichs 51 sind in der Fig. 3 mit einem Zahnteilungswinkel 71 auf dem Sockel des Kopfbereichs 51 angeordnet. Der Zahnteilungswinkel 71 ist gleich einem Verzahnungsteilungswinkel der Verzahnung des Koaxialgetriebes.

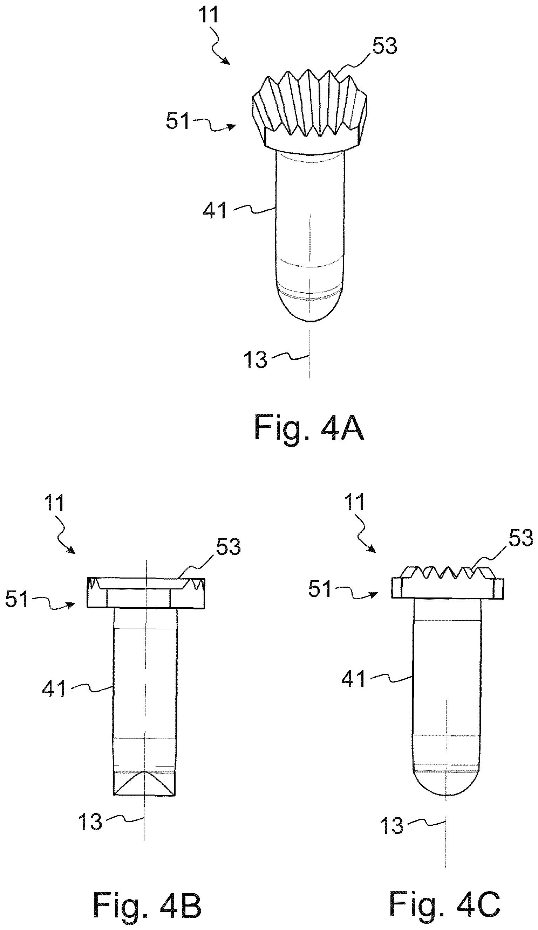

Fig. 4A zeigt eine Ansicht eines Zahnstifts 11 gemäß einer weiteren typischen Ausführungsform. Wie in der Seitenansicht der Fig. 4B und der Ansicht der Fig. 4C von radial innen auf den Zahnstift 11 gezeigt, ist der Kopfbereich 51 des Zahnstifts 11 sowohl in Umfangsrichtung als auch in radialer Richtung gegenüber dem Rumpf 41 verbreitert.

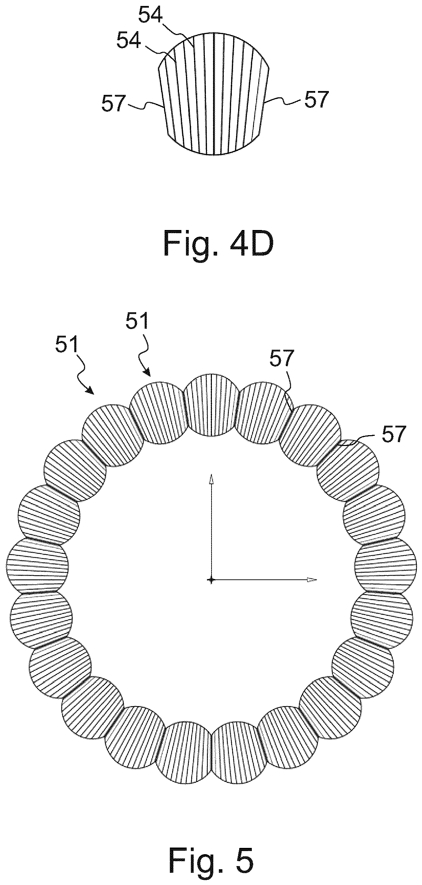

Fig. 4D zeigt den Kopfbereich 51 in einer Ansicht in axialer Richtung. Der Kopfbereich 51 mit Zähnen 53 und jeweiligen Zahnköpfen 54 weist eine erste Querschnittsfläche auf, welche eine Kreisteilfläche bildet. Die erste Querschnittsfläche wird radial innen und radial außen jeweils durch einen Kreisbogen und in Umfangsrichtung durch radial ausgerichtete Kanten 57 begrenzt. Wie in Fig. 5 dargestellt, können sich die in einem Zahnträger gelagerten, ringförmig angeordneten Zahnstifte in Umfangsrichtung an radial ausgerichteten Flächen mit den radial ausgerichteten Kanten 57 aneinander abstützen.

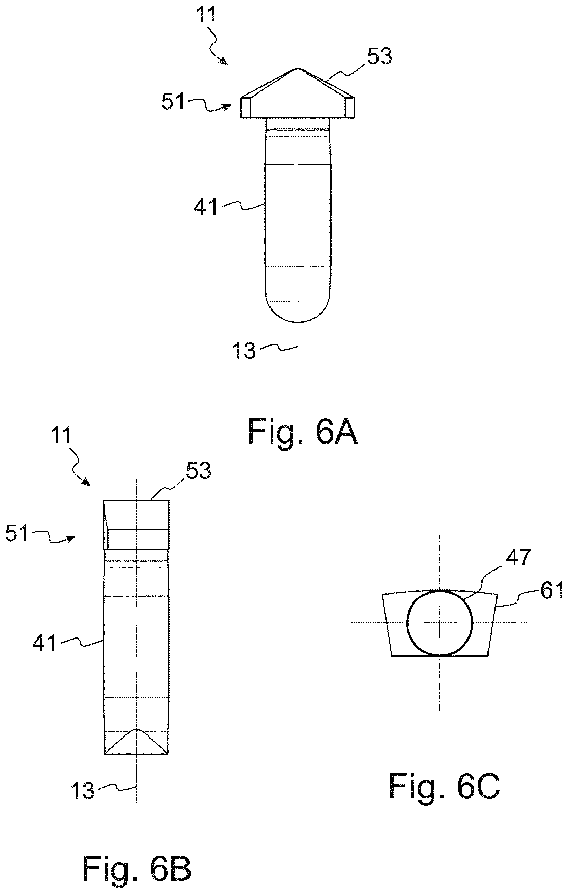

Fig. 6A-C zeigen Ansichten eines nicht erfindungsgemäßen Zahnstifts 11 mit einem Kopfbereich 51, wobei der Kopfbereich 51 einen einzelnen Zahn 53 umfasst. Wie in der Ansicht der Fig. 6A von radial innen auf den Zahnstift 11 gezeigt, ist eine Zahnbreite des Zahns 53 gleich einer Kopfbereichbreite des Kopfbereichs 51. Der Kopfbereich 51 ist in Umfangsrichtung gegenüber dem Rumpf 41 verbreitert. Wie in der Seitenansicht in Fig. 6B gezeigt, ist der Kopfbereich 51 in radialer Richtung beispielsweise gleich breit wie der Rumpf 41 ausgebildet. Fig. 6C zeigt insbesondere eine Überlagerung einer zur Längsachse 13 des Zahnstifts 11 senkrechten, ersten Querschnittsfläche 61 des Kopfbereichs 51 und einer zur Längsachse 13 senkrechten, zweiten Querschnittsfläche 47 des Rumpfs 41. Beispielsweise ist die erste Querschnittsfläche 61 des Kopfbereichs 51 ungefähr doppelt so groß wie die zweite Querschnittsfläche 47 des Rumpfs 41. Ausführungsformen mit einem gegenüber dem Rumpf verbreiterten Kopfbereich können insbesondere eine höhere Tragfähigkeit oder eine höhere Steifigkeit aufweisen, oder eine verbesserte Sicherung gegen ein Verdrehen der Zahnstifte um die jeweilige Längsachse bereitstellen.

## Patentansprüche

1. Koaxialgetriebe (1), mit
- einer bezüglich einer Drehachse (3) des Koaxialgetriebes (1) axial ausgerichteten Verzahnung (5),
- einem Zahnträger (7) mit axial ausgerichteten Führungen (9),
- Zahnstiften (11), welche jeweils einen in einer Führung (9) des Zahnträgers (7) axial verschieblich qelaqerten Rumpf (41) und einen Kopfbereich (51) umfassen,
**dadurch gekennzeichnet, dass**
der Kopfbereich (51) gegenüber dem Rumpf (41) verbreitert ausgebildet ist, und dass der Kopfbereich (51) mindestens zwei Zähne (53) zum Eingriff mit der Verzahnung (5) umfasst.

2. Koaxialgetriebe (1) nach Anspruch 1, wobei der Kopfbereich (51) gegenüber dem Rumpf (41) in Umfangsrichtung um die Drehachse (3) verbreitert ausgebildet ist.

3. Koaxialgetriebe (1) nach einem der vorhergehenden Ansprüche, wobei der Kopfbereich (51) gegenüber dem Rumpf (41) in radialer Richtung verbreitert ausgebildet ist.

4. Koaxialgetriebe (1) nach einem der vorhergehenden Ansprüche, wobei eine zu einer Längsachse (13) des Zahnstifts (11) senkrechte, erste Querschnittsfläche (61) des Kopfbereichs (51) zwei bezüglich der Drehachse (3) radial ausgerichtete Kanten (57) umfasst.

5. Koaxialgetriebe (1) nach Anspruch 4, wobei die erste Querschnittsfläche (61) des Kopfbereichs (51) zumindest im Wesentlichen ein Trapez, einen Kreisringausschnitt oder eine Kreisteilfläche bildet.

6. Koaxialgetriebe (1) nach einem der vorhergehenden Ansprüche, wobei eine Winkelweite (69) des Kopfbereichs (51) bezüglich der Drehachse (3) zumindest im Wesentlichen gleich einem Teilungswinkel der Zahnstifte (11) ist.

7. Koaxialgetriebe (1) nach einem der vorhergehenden Ansprüche, wobei eine zu einer Längsachse (13) des Zahnstifts (11) senkrechte, zweite Querschnittsfläche (47) des Rumpfs (41) rund ausgebildet ist.

8. Koaxialgetriebe (1) nach einem der vorhergehenden Ansprüche, wobei der Kopfbereich (51) einen Gleitkontakt zu Kopfbereichen (51) von in Umfangsrichtung benachbarten Zahnstiften (11) ausbildet.

9. Koaxialgetriebe (1) nach einem der vorhergehenden Ansprüche, mit einer Verdrehsicherung, welche eine Gleitfläche zum Gleitkontakt mit einer Radialinnenfläche des Kopfbereichs (51) und/oder einer Radialaußenfläche des Kopfbereichs (51) umfasst.

10. Koaxialgetriebe (1) nach Anspruch 9, wobei die Verdrehsicherung drehfest mit dem Zahnträger (7) oder drehfest mit einem Gehäuse des Koaxialgetriebes (1) verbunden ist.

11. Koaxialgetriebe (1) nach einem der vorhergehenden Ansprüche, wobei der Kopfbereich (51) in axialer Richtung eine axiale Höhe (65) von mindestens einer 1,5-fachen Zahnhöhe (67) des mindestens einen Zahns (53) aufweist.

12. Koaxialgetriebe (1) nach einem der Ansprüche 2 bis 11, wobei eine Kopfbereichbreite (59) des Kopfbereichs (51) in Umfangsrichtung mindestens 1,2-fach breiter, insbesondere 1,5-fach breiter, ist als ein Rumpfdurchmesser (43) des Rumpfs (41) in Umfangsrichtung.

13. Koaxialgetriebe (1) nach Anspruch 1, wobei ein Zahnteilungswinkel (71) der mindestens zwei Zähne (53) des Kopfbereichs (51) gleich einem Vielfachen eines Verzahnungsteilungswinkel der Verzahnung (5) ist.

14. Verwendung eines Koaxialgetriebes (1) nach einem der Ansprüche 1 bis 13.

## Claims

1. Coaxial transmission (1), comprising
- a toothing (5) axially aligned with respect to an axis of rotation (3) of the coaxial transmission (1),
- a tooth carrier (7) having axially aligned guides (9),
- tooth pins (11), each comprising a body (41) mounted in an axially movable manner in a guide (9) of the tooth carrier (7) and a head region (51), **characterised in that** the head region (51) is designed to be widened relative to the body (41), **and in that** the head region (51) comprises at least two teeth (53) for engagement with the toothing (5).

2. Coaxial transmission (1) according to claim 1, wherein the head region (51) is designed to widened relative to the body (41) in the circumferential direction about the axis of rotation (3).

3. Coaxial transmission (1) according to either of the preceding claims, wherein the head region (51) is designed to be widened relative to the body (41) in the radial direction.

4. Coaxial transmission (1) according to any of the preceding claims, wherein a first cross-sectional area (61) of the head region (51) perpendicular to a longitudinal axis (13) of the tooth pin (11) comprises two edges (57) oriented radially with respect to the axis of rotation (3).

5. Coaxial transmission (1) according to claim 4, wherein the first cross-sectional area (61) of the head region (51) forms at least substantially a trapezoid, a circular ring sector or a circular partial surface.

6. Coaxial transmission (1) according to any of the preceding claims, wherein an angular width (69) of the head region (51) with respect to the axis of rotation (3) is at least substantially equal to a pitch angle of the tooth pins (11).

7. Coaxial transmission (1) according to any of the preceding claims, wherein a second cross-sectional area (47) of the body (41) perpendicular to a longitudinal axis (13) of the tooth pin (11) is round.

8. Coaxial transmission (1) according to any of the preceding claims, wherein the head region (51) forms a sliding contact to head regions (51) of tooth pins (11) adjacent in the circumferential direction.

9. Coaxial transmission (1) according to any of the preceding claims, comprising an anti-rotation device which comprises a sliding surface for sliding contact with a radial inner surface of the head region (51) and/or a radial outer surface of the head region (51).

10. Coaxial transmission (1) according to claim 9, wherein the anti-rotation device is non-rotatably connected to the tooth carrier (7) or non-rotatably connected to a housing of the coaxial transmission (1).

11. Coaxial transmission (1) according to any of the preceding claims, wherein the head region (51) has an axial height (65) in the axial direction of at least 1.5 times the tooth height (67) of the at least one tooth (53).

12. Coaxial transmission (1) according to any of claims 2 to 11, wherein a head region width (59) of the head region (51) in the circumferential direction is at least 1.2 times wider, in particular 1.5 times wider, than a body diameter (43) of the body (41) in the circumferential direction.

13. Coaxial transmission (1) according to claim 1, wherein a tooth pitch angle (71) of the at least two teeth (53) of the head region (51) is equal to a multiple of a toothing pitch angle of the toothing (5).

14. Use of a coaxial transmission (1) according to any of claims 1 to 13.

## Revendications

1. Engrenage coaxial (1), comportant
- une denture (5) alignée axialement par rapport à un axe de rotation (3) de l'engrenage coaxial (1),
- un porte-dents (7) comportant des guides (9) alignés axialement,
- des tenons dentaires (11) qui comprennent respectivement un tronc (41) monté en déplacement axial dans un guide (9) du porte-dents (7) et une partie de tête (51), **caractérisé en ce que**
la partie de tête (51) est réalisée de façon élargie par rapport au tronc (41), et **en ce que** la partie de tête (51) comprend au moins deux dents (53) destinées à venir en prise avec la denture (5).

2. Engrenage coaxial (1) selon la revendication 1, dans lequel, par rapport au tronc (41), la partie de tête (51) est réalisée de façon élargie dans la direction circonférentielle autour de l'axe de rotation (3).

3. Engrenage coaxial (1) selon l'une des revendications précédentes, dans lequel, par rapport au tronc (41), la partie de tête (51) est réalisée de façon élargie dans la direction radiale.

4. Engrenage coaxial (1) selon l'une des revendications précédentes, dans lequel une première surface de section transversale (61) de la partie de tête (51) comprend deux bords (57) alignés radialement par rapport à l'axe de rotation (3), laquelle première surface est perpendiculaire à un axe longitudinal (13) du tenon dentaire (11).

5. Engrenage coaxial (1) selon la revendication 4, dans lequel la première surface de section transversale (61) de la partie de tête (51) forme au moins sensiblement un trapèze, une découpe d'anneau circulaire ou une surface partielle circulaire.

6. Engrenage coaxial (1) selon l'une des revendications précédentes, dans lequel une largeur angulaire (69) de la partie de tête (51) par rapport à l'axe de rotation (3) est au moins sensiblement égale à un angle de pas des tenons dentaires (11).

7. Engrenage coaxial (1) selon l'une des revendications précédentes, dans lequel une seconde surface de section transversale (47) du tronc (41) est réalisée ronde, laquelle seconde surface est perpendiculaire à un axe longitudinal (13) du tenon dentaire (11).

8. Engrenage coaxial (1) selon l'une des revendications précédentes, dans lequel la partie de tête (51) forme un contact de glissement avec des parties de tête (51) de tenons dentaires (11) adjacents dans la direction circonférentielle.

9. Engrenage coaxial (1) selon l'une des revendications précédentes, comportant un blocage antirotation qui comprend une surface de glissement pour le contact de glissement avec une surface interne radiale de la partie de tête (51) et/ou avec une surface externe radiale de la partie de tête (51).

10. Engrenage coaxial (1) selon la revendication 9, dans lequel le blocage antirotation est relié solidairement en rotation au porte-dents (7) ou solidairement en rotation à un boîtier de l'engrenage coaxial (1).

11. Engrenage coaxial (1) selon l'une des revendications précédentes, dans lequel la partie de tête (51) présente, dans la direction axiale, une hauteur (65) axiale d'au moins 1,5 fois la hauteur de dent (67) de l'au moins une dent (53).

12. Engrenage coaxial (1) selon l'une des revendications 2 à 11, dans lequel une largeur de partie de tête (59) de la partie de tête (51) est, dans la direction circonférentielle, au moins 1,2 fois plus large, en particulier 1,5 fois plus large qu'un diamètre de tronc (43) du tronc (41) dans la direction circonférentielle.

13. Engrenage coaxial (1) selon la revendication 1, dans lequel un angle de pas de dent (71) des au moins deux dents (53) de la partie de tête (51) est égal à un multiple d'un angle de pas de denture de la denture (5).

14. Utilisation d'un engrenage coaxial (1) selon l'une des revendications 1 à 13.
